# EUROPÄISCHE PATENTSCHRIFT

(11) **EP 1 963 040 B1**
(45) Veröffentlichungstag und Bekanntmachung des Hinweises auf die Patenterteilung: **16.05.2012**
(21) Anmeldenummer: 06806684.4
(22) Anmeldetag: 04.11.2006
(51) Int. Cl.: B23B 31/117, F16B 2/14, F16D 1/09, F16D 1/08, F16D 1/10

(54) **SPANNEINRICHTUNG**
CLAMPING DEVICE
DISPOSITIF DE SERRAGE

(30) Priorität: 19.12.2005 DE 102005061012
(43) Veröffentlichungstag der Anmeldung: 03.09.2008
(73) Patentinhaber: Schunk GmbH & Co. KG Spann- und Greiftechnik, 74348 Lauffen am Neckar (DE)
(72) Erfinder: RETZBACH, Thomas, 74357 Bönnigheim (DE); HAAG, Michael, 74232 Abstatt (DE)
(74) Vertreter: Paul, Dieter-Alfred
(86) Internationale Anmeldenummer: PCT/EP2006/010584
(87) Internationale Veröffentlichungsnummer: WO 2007/073796

(56) Entgegenhaltungen:
- WO-A-02/05992
- DE-A1- 19 708 983
- DE-C- 958 445
- DE-C1- 19 827 109
- DE-C1- 19 834 739
- DE-C1- 19 961 563
- GB-A- 1 474 163
- JP-A- 63 076 916
- US-A1- 2003 185 624

## Beschreibung

Die vorliegende Erfindung betrifft eine Spanneinrichtung gemäß dem Oberbegriff des Anspruchs 1. Eine Solche Spanneinrichtung ist. mit einem Grundkörper versehen, der eine zentrale Aufnahme für ein zu spannendes Bauteil oder Werkzeug aufweist, wobei in dem Grundkörper wenigstens eine Spannut ausgebildet ist, welche zu einer Stirnseite des Grundkörpers hin offen ist, und mit wenigstens einem Spannkeil, der in die Spannut von deren offenen Stirnseite her unter radialer Verformung des zwischen der Spannut und der Aufnahme liegenden Innenwandabschnitts axial einpreßbar ist.

Derartige Spanneinrichtungen sind aus der DE 199 61 563 C1 bekannt und werden in der Praxis beispielsweise eingesetzt, um einen Werkzeugschaft wie einen Bohrer- oder Fräserschaft an der Arbeitsspindel einer entsprechenden Werkzeugmaschine zu fixieren. Die bekannten Spanneinrichtungen besitzen einen Grundkörper aus einem formsteifen Material, in dem eine zentrale Aufnahme für ein zu spannendes Bauteil ausgebildet sind. Die zentrale Aufnahme ist von einer Ringnut umgeben, wobei die zwischen der Ringnut und der Aufnahme verbleibende Innenwandung eine dünnwandige Spannhülse bildet. Die bekannte Spanneinrichtung weist weiterhin als Spannmittel einen Keilring auf, der einen Ringkörper und mehrere daran in Umfangsrichtung beabstandet angeordnete und im wesentlichen axial abragende Spannzungen aufweist. Die Spannzungen besitzen einen zu ihrem freien Ende hin keilförmig zulaufenden Querschnitt und können unter radialer Verformung der Spannhülse axial in die Ringnut eingepreßt werden, um in der Aufnahme ein Bauteil zu fixieren.

Die bekannten Spanneinrichtungen haben sich in der Praxis durchaus bewährt. Probleme können jedoch dahingehend auftreten, daß sich bei sehr hohen Drehzahlen die Aufnahme aufgrund der auftretenden Fliehkräfte aufweiten kann und dann eine sichere Spannung des Werkzeugs nicht mehr gegeben ist.

Aufgabe der Erfindung ist es daher, eine Spanneinrichtung der eingangs genannten Art so auszugestalten, daß auch bei hohen Drehzahlen eine sichere Spannung von Bauteilen gewährleistet werden kann.

Diese Aufgabe ist durch eine Spanneinrichtung gelöst, welche die Merkmale von Anspruch 1 aufweist. Bei der erfindungsgemäßen Spanneinrichtung ist die Wandung, welche die Spannut außenseitig begrenzt, wenigstens über einen axialen Teilabschnitt derart elastisch ausgebildet, dass sie elastisch nach außen verformt wird, wenn der wenigstens eine Spannkeil in die Spannut eingepreßt wird.Bei der erfindungsgemäβigen Spanneinrichtung ist

Der Erfindung liegt damit die Überlegung zugrunde, die Außenwandung, welche die Spannut bzw. Spannuten außenseitig begrenzt, nicht wie im Stand der Technik formsteif, sondern elastisch auszubilden, so daß sie beim Eintreiben der Spannkeile nach außen verformt wird. Im Ergebnis werden die Spannkeile aufgrund der elastischen Rückstellkraft der Außenwandung stets nach innen gedrückt, wodurch einer Aufweitung der Aufnahme aufgrund der im Betrieb auftretenden Fliehkräfte entgegengewirkt wird, so daß auch bei sehr hohen Drehzahlen eine sichere Einspannung gewährleistet ist. Wenn beispielsweise eine Spanneinrichtung mit einem Spanndurchmesser von etwa 3 mm im Betrieb bei etwa 400.000 U/min rotiert, wird der Spanndurchmesser durch die auftretenden Fliehkräfte radial um ca. 2 µm aufgeweitet. Um dieser Aufweitung entgegenzuwirken, wird die Wandung, welche die Spannut außenseitig begrenzt, um einen vorgebbaren Faktor aufgeweitet. Als günstig hat sich erwiesen, wenn die radiale Aufweitung im Bereich von 4 µm bis 15 µm und insbesondere im Bereich von etwa 10 µm liegt, so daß im Betrieb zumindest ein Großteil der Spannkraft aufrechterhalten bleibt.

Dabei sind in dem Grundkörper mehrere Spannuten ausgebildet, welche um die Aufnahme herum gleichmäßig verteilt angeordnet sind. In diesem Fall kann es zweckmäßig sein, die Spannuten an ihrem in Umfangsrichtung betrachteten Mittelbereich über schmale Einschnitte in der zwischen den Spannuten und der Aufnahme gelegenen Innenwand mit der Aufnahme zu verbinden. Auf diese Weise werden einzelne Innenwandabschnitte gebildet, die mit wenig Aufwand elastisch verformt werden können und zusätzlich dafür sorgen, daß sich vergleichsweise große Spannwege realisieren lassen. Versuche haben gezeigt, daß sich bei einem Spanndurchmesser von 3 mm im Falle einer Leerspannung ein radialer Spannweg von etwa 15 µm realisieren läßt, d.h. der Durchmesser der Aufnahme um ca. 30 µm verringert werden kann. Bei den bekannten Spanneinrichtungen mit einer geschlossenen Spannhülse liegen die erzielbaren radialen Spannwege im Bereich von etwa 3 bis 4 µm.

In an sich bekannter Weise kann die Kontur der Spannuten an die Kontur der Spannkeile angepaßt sein, so daß die Spannkeile in den Spannuten positioniert werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Ausführungsform einer erfindungsgemäßen Spanneinrichtung im Längsschnitt,
- Figur 2: die Spanneinrichtung aus Figur 1 in Vorderansicht,

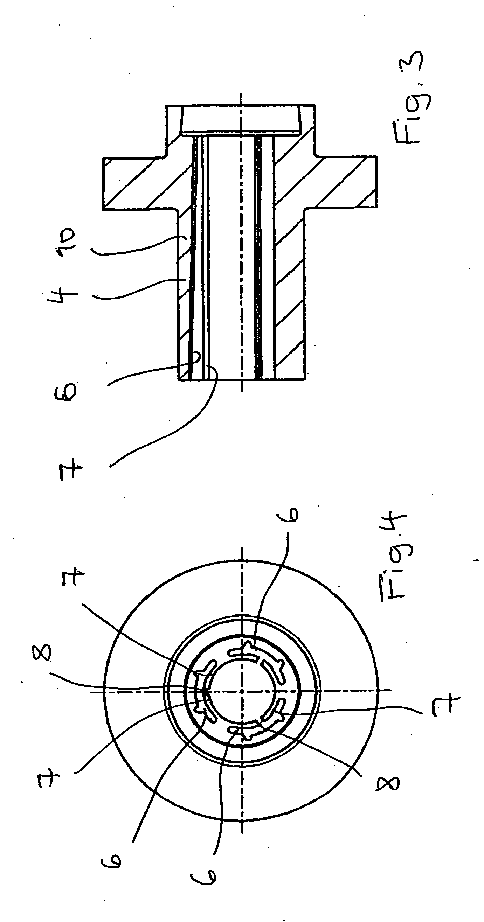

- Figur 3: den Grundkörper der Spanneinrichtung aus Figur 1 im Längsschnitt,
- Figur 4: den Grundkörper aus Figur 3 in Vorderansicht,

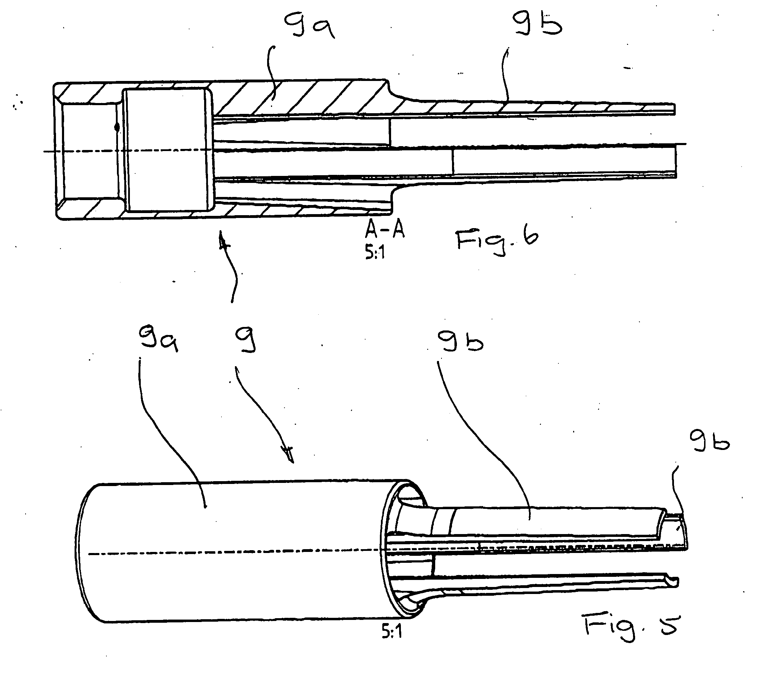

- Figur 5: den Keilring der Spanneinrichtung aus Figur 1 in perspektivischer Ansicht und
- Figur 6: den Keilring aus Figur 5 im Längsschnitt.

In den Figuren ist eine Ausführungsform einer Spanneinrichtung 1 gemäß der vorliegenden Erfindung dargestellt. Die Spanneinrichtung 1 umfaßt einen Grundkörper 2 mit einem formsteifen Befestigungsflansch 3, über welchen der Grundkörper beispielsweise an der Arbeitsspindel einer Bearbeitungsmaschine befestigt werden kann. Desweiteren besitzt der Grundkörper 2 einen von dem Flansch 3 in den Figuren linksseitig abragenden Anschlußschaft 4 und ist mit einer zentralen, sich axial durch den Grundkörper 2 erstreckenden Aufnahme 5 versehen, in die ein zylindrischer Schaft eines Werkzeugs wie beispielsweise eines Bohrers oder Fräsers eingeschoben werden kann. In dem Anschlußschaft 4 sind insgesamt drei Spannuten 6 ausgebildet, welche in Umfangsrichtung betrachtet gleichmäßig verteilt um die Aufnahme 5 herum angeordnet sind. Die Spannuten 6 sind ringabschnittförmig ausgebildet und konzentrisch zu der Aufnahme 5 angeordnet. Die Spannuten 6, deren axiale Länge etwa dem erforderlichen Spannbereich entspricht, werden zur Aufnahme 5 hin von relativ dünnen und daher elastisch verformbaren Innenwandabschnitten 7 begrenzt, wobei diese Innenwandabschnitte 7 in Umfangsrichtung betrachtet mittig von den Spannuten 6 durch schmale Einschnitte 8 durchbrochen sind.

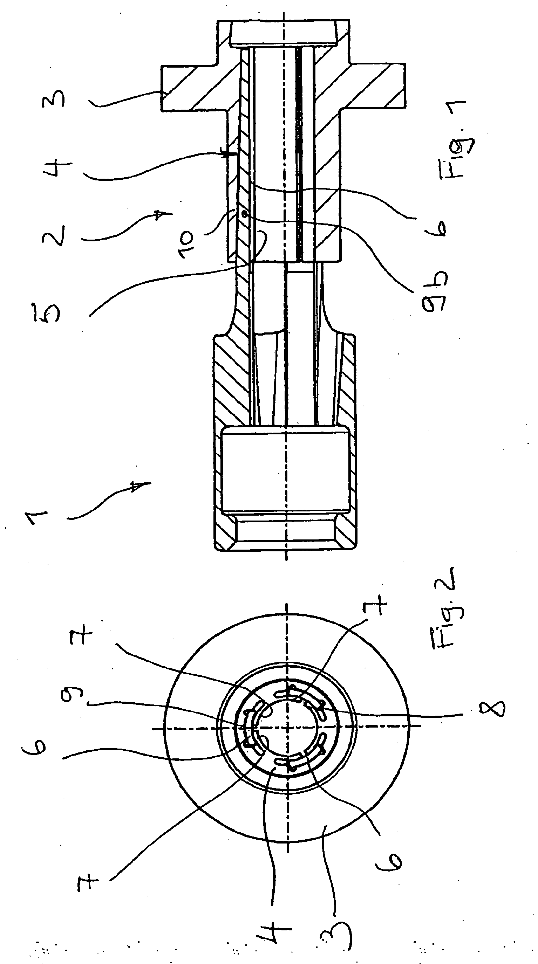

Wie insbesondere in der Figur 1 gut erkennbar ist, besitzen die Spannuten 6 einen etwa keilförmigen Querschnitt, der so gestaltet ist, daß die Außenwandungen der Spannuten 6 vom freien Ende des Anschlußschafts 4 ausgehend konisch zulaufen, während die Innenwandungen der Spannuten 6 zylindrisch sind.

Zur Fixierung eines Werkzeugschafts o. dgl. in der Aufnahme 5 ist ein Keilring 9 vorgesehen, der einen Ringkörper 9a und drei Spannzungen 9b, die an dem Ringkörper 9a in Umfangsrichtung gleichmäßig beabstandet voneinander angeordnet sind und sich im wesentlichen in Axialrichtung erstrecken, aufweist. Die Spannzungen 9b laufen zu ihren freien Enden hin keilförmig zu, wobei ihre Innenwandungen auf einer Zylinderfläche liegen, deren Durchmesser etwa dem Innendurchmesser der Spannuten 6 entspricht, und die Außenwandungen entsprechend der Außenwandungen der Spannuten 6 auf einer zu den freien Spannzungenenden hin zulaufenden Konusfläche liegen. Die Spannzungen 9b des Keilrings 9 können in die Spannuten 6 des Grundkörpers 2 von der Stirnseite des Anschlußschafts 4 her angetrieben werden, wodurch die dünnen Innenwandabschnitte 7 an der Innenseite der Spannuten 6 radial nach innen verformt werden und dadurch einen in die Aufnahme 5 eingesetzten Werkzeugschaft o. dgl. fixieren.

Erfindungsgemäß ist die Außenwandung 10 des Grundkörpers 2 im Bereich des Anschlußschafts 4 im Vergleich zu den elastischen Innenwandabschnitten zwischen den Spannuten 6 und der Aufnahme 5 zwar dickwandig ausgebildet, besitzt aber immer noch eine derartige Elastizität, daß sie elastisch nach außen verformt wird, wenn die Spannzungen 9b des Keilrings 9 in die Spannuten 6 eingetrieben werden. Damit wirken im Betrieb radial nach innen gerichtete Rückstellkräfte von der Wandung 10 auf die Spannzungen 9b und verhindern, daß sich der Grundkörper 2 aufgrund der im Betrieb auftretenden hohen Fliehkräfte aufweitet. Im Ergebnis wird durch die elastische Verformung der Wandung des Anschlußschafts 4 erreicht, daß auch bei hohen Drehzahlen eine sichere Spannung gewährleistet ist.

## Patentansprüche

1. Spanneinrichtung mit einem Grundkörper (2), der eine zentrale Aufnahme (5) für ein zu spannendes Bauteil oder Werkzeug aufweist, wobei in dem Grundkörper (2) wenigstens eine Spannut (6) ausgebildet ist, welche zu einer Stirnseite des Grundkörpers (2) hin offen ist, und mit mehreren Spannkeilen (9b), die in die Spannut (6) von deren offenen Stirnseite her unter radialer Verformung eines zwischen der Spannut (6) und der Aufnahme liegenden Innenwandabschnitts (7) axial einpreßbar sind, wobei die mehreren Spannkeile (9b) in Umfangsrichtung gleichmäßig beabstandet an einem Ringkörper (9a) vorgesehen sind und von diesem im wesentlichen axial abragen, **dadurch gekennzeichnet, dass** die Wandung (10), welche die Spannut (6) außenseitig begrenzt, wenigstens über einen axialen Teilabschnitt derart elastisch ausgebildet ist, dass sie elastisch nach außen verformt wird, wenn der wenigstens eine Spannkeil (9b) in die Spannut (6) eingepreßt wird, und dass in dem Grundkörper (2) mehrere Spannuten (6) ausgebildet sind, welche um die Aufnahme (5) herum gleichmäßig verteilt angeordnet sind.

2. Spanneinrichtung nach Anspruch 1, **dadurch gekennzeichnet, dass** die Spannuten (6) in ihrem in Umfangsrichtung betrachteten Mittelbereich über schmale Einschnitte (8) in der Innenwand (7) mit der Aufnahme (5) verbunden sind.

3. Spanneinrichtung nach Anspruch 1 oder 2, **dadurch gekennzeichnet, dass** die Kontur der Spannuten (6) an die Kontur der Spannkeile (9b) angepaßt ist, so dass die Spannkeile (9b) in den Spannuten (6) positioniert werden.

4. Spanneinrichtung nach einem der Ansprüche 1 bis 3, **dadurch gekennzeichnet, dass** insgesamt drei Spannkeile (9b) gleichmäßig beabstandet an dem Ringkörper (9a) angeordnet sind.

5. Spanneinrichtung nach einem der Ansprüche 1 bis 4., **dadurch gekennzeichnet, dass** die Außenwandungen der Spannkeile (9b) auf einer zu den freien Spannkeilenden hin zulaufenden Konusfläche liegen.

6. Spanneinrichtung nach Anspruch 5, **dadurch gekennzeichnet, dass** die Außenwandungen der Spannuten (6) im wesentlichen komplementär zu den Außenwandungen der Spannkeile (9b) und entsprechend in Einschubrichtung der Spannkeile (9b) konusförmig zulaufend ausgebildet sind.

## Claims

1. Clamping device with a base body (2), that has a central receptacle (5) for a work piece or tool that is to be clamped, at least one clamping groove (6) being formed in the base body, which is open toward an end face of the base body (2), and with at least one clamping wedge (9b) that can be pressed axially into the clamping groove (6) from the open end face thereof while radially deforming an inner wall section positioned between the clamping groove (6) and the receptacle, wherein the wall (10) that delimits the clamping groove (6) at its outer side is formed with an elasticity on at least an axial part section thereof, that it is elastically deformed outwardly, when the at least one clamping wedge (9b) is pressed into the clamping groove (6), **characterized in that** several clamping grooves (6) are formed in the base body (2), that are arranged in uniformly spaced-apart fashion around the receptacle (5) and that several clamping wedges (9b) are arranged in an uniformly spaced-apart fashion on a ring body (9b) and extend essentially in an axial direction therefrom.

2. Clamping device according to claim 1, **characterized in that** the clamping grooves (6) are connected in their respective middle portion if considered in their circumferential direction, with the receptacle (5) by a narrow cut outs (8) in the inner wall (7).

3. Clamping device according to claim 1 or 2, **characterized in that** the contour of the clamping grooves (6) is adapted to the contour of the clamping wedges (9b), so that the clamping wedges (9b) are positioned in the clamping grooves (6).

4. Clamping device according to any of the claims 1 to 3, **characterized in that** a total of three clamping wedges (9b) are arranged in the uniformly spaced-apart fashion on the ring body (9a).

5. Clamping device according to any of the claims 1 to 4, **characterized in that** the outer walls of the clamping wedges lie on conical surface converging toward the three clamping wedge ends.

6. Clamping device according to claim 5, **characterized in that** the outer walls of the clamping grooves (6) are configured in substantially complementary fashion to the outer walls of the clamping wedges (9b) and are accordingly configured in a conically converging manner in the insertion direction of the clamping wedges.

## Revendications

1. Dispositif de serrage avec un corps principal (2) qui présente un réceptacle central (5) pour une pièce de construction ou un outil à serrer, sachant que dans le corps principal (2) au moins une rainure de serrage (6) est formée, qui est ouverte en face d'un côté frontal du corps principal (2) et avec plusieurs clavettes de serrage (9b) qui peuvent être enfoncées de manière axiale dans la rainure de serrage (6) à partir de son côté frontal sous déformation radiale d'une section de paroi intérieure se trouvant entre la rainure de serrage (6) et le réceptacle, sachant que les plusieurs clavettes de serrage (9b) sont prévues espacées de manière régulière dans la direction périphérique sur un corps annulaire (9a) et dépassent de celui-ci essentiellement de manière axiale, **caractérisé en ce que** la paroi (10) qui limite la rainure de serrage (6) sur le côté extérieur, est formée de manière élastique au moins par une section partielle axiale de telle manière qu'elle est déformée de manière élastique vers l'extérieur, lorsque la clavette de serrage minimum (9b) est enfoncée dans la rainure de serrage (6) et que dans le corps principal (2) plusieurs rainures de serrage (6) sont formées qui sont placées selon une répartition régulière autour du réceptacle (5).

2. Dispositif de serrage selon revendication 1, **caractérisé en ce que** les rainures de serrage (6) sont reliées avec le réceptacle (5) dans leur zone centrale déterminée dans la direction périphérique par des creux étroits (8) dans la paroi intérieure (7).

3. Dispositif de serrage selon revendication 1 ou 2, **caractérisé en ce que** le contour des rainures de serrage (6) est adapté au contour des clavettes de serrage (9b) de manière à ce que les clavettes de serrage (9b) soit positionnées dans les rainures de serrage (6).

4. Dispositif de serrage selon l'une des revendications 1 à 3, **caractérisé en ce que** trois clavettes de serrage (9b) au total sont placées à distance régulière sur le corps annulaire (9a).

5. Dispositif de serrage selon l'une des revendications 1 à 4, **caractérisé en ce que** les parois extérieures des clavettes de serrage (9b) se trouvent sur une surface conique s'étendant face aux clavettes de serrage libres.

6. Dispositif de serrage selon revendication 5, **caractérisé en ce que** les parois extérieures des rainures de serrage (6) sont formées essentiellement de manière complémentaire par rapport aux parois extérieures des clavettes de serrage (9b) et respectivement dans la direction d'insertion des clavettes de serrage (9) en s'étendant en forme de cône.
